# EUROPÄISCHE PATENTSCHRIFT

(11) **EP 2 337 969 B1**
(45) Veröffentlichungstag und Bekanntmachung des Hinweises auf die Patenterteilung: **31.12.2014**
(21) Anmeldenummer: 09744071.3
(22) Anmeldetag: 23.10.2009
(51) Int. Cl.: F16F 15/14, F16F 15/124

(54) **VORRICHTUNG ZUR VERMINDERUNG VON DREHSCHWINGUNGEN**
DEVICE FOR REDUCING ROTARY OSCILLATIONS
DISPOSITIF DE RÉDUCTION DES VIBRATIONS TORSIONNELLES

(30) Priorität: 23.10.2008 DE 102008052902
(43) Veröffentlichungstag der Anmeldung: 29.06.2011
(73) Patentinhaber: Voith Patent GmbH, 89522 Heidenheim (DE)
(72) Erfinder: BECKER, Markus, K., 44388 Dortmund (DE); MENNE, Achim, 74564 Crailsheim (DE)
(74) Vertreter: Dr. Weitzel & Partner
(86) Internationale Anmeldenummer: PCT/EP2009/007588
(87) Internationale Veröffentlichungsnummer: WO 2010/046116

(56) Entgegenhaltungen:
- EP-A- 1 672 250
- DE-A1- 3 702 176
- GB-A- 2 195 003
- US-A- 5 036 726
- US-A1- 2004 069 092
- US-A1- 2006 081 086

## Beschreibung

Die Erfindung betrifft eine Vorrichtung zur Verminderung von Drehschwingungen einer rotierenden Welle mit den im Oberbegriff von Anspruch 1 genannten Merkmalen. Solche Vorrichtungen können in Antriebssträngen mit oder ohne Drehmomentübertragungsfunktion, also als reiner Tilger oder als elastische Kupplung eingesetzt werden.

Die Antriebsstränge können dabei beispielsweise einen Verbrennungsmotor oder einen Elektromotor umfassen. Insbesondere werden derartige Vorrichtungen zur Verminderung von Drehschwingungen beziehungsweise zur Dämpfung von Drehschwingungen als Torsionsschwingungsdämpfer für einen Verbrennungsmotor eingesetzt. Die Torsionsschwingungsdämpfer der genannten Art umfassen dabei typischerweise ein Primärteil und ein Sekundärteil. Diese bilden gemeinsam einen Hohlraum, welcher eine Federeinrichtung sowie eine Dämpfungseinrichtung umfasst.

Beispielhaft soll die US 55 73 460 genannt werden, welche eine derartige elastische Kupplung in Scheibenbauweise beschreibt, welche zwei Kupplungshälften umfasst. Die Kupplungshälften sind begrenzt gegeneinander verdrehbar und über elastische Kopplungselemente miteinander verbunden. Im radial äußeren Bereich eines Innenraums befinden sich Dämpfungskammern, die mit einem Dämpfungsmedium füllbar sind. Die Aufgabe von derartigen elastischen Kupplungen liegt darin, die Laufruhe von Antrieben in Brennkraftmaschinen, und hier insbesondere in Fahrzeugen, in allen Betriebszuständen zu gewährleisten. Insbesondere sollen störende Torsionsschwingungen vom Antriebsstrang fern gehalten werden.

Neben derartigen elastischen Kupplungen sind auch sogenannte Tilger bekannt, welche Drehschwingungen dämpfen, ohne eine drehmomentübertragende Funktion zu haben. Derartige Tilger werden dabei typischerweise auf die Welle aufgesetzt. So beschreibt die DE 103 46 253 A1 beispielsweise einen Schwingungstilger, welcher hier zum Tilgen der Torsionsschwingungen von Nockenwellen eingesetzt wird. Der Aufbau ist hier so gewählt, dass Masseelemente mit zunehmender Rotation nach außen gegen eine Kulisse gedrückt werden und durch die Bewegung an dieser Kulisse ein sich über die Rotation veränderndes Trägheitsmoment des Schwingungsdämpfers und damit der rotierenden Welle erzeugen. Auf diese Art werden die Torsionsschwingungen der Welle gedämpft. Ein ähnlicher Aufbau mit sich aufgrund der Fliehkraft nach außen verschiebenden Masseelementen ist auch in der DE 199 14 871 C2 beschrieben.

Das Problem bei derartigen Vorrichtungen liegt nun darin, dass diese typischerweise bei einer entsprechenden Eigenfrequenz oder entsprechenden Vielfachen hiervon ihre optimale Funktion entfalten können. Es ist jedoch sehr schwierig, diese Schwingungstilger beziehungsweise elastischen Kupplungen baulich auf exakt diese Eigenfrequenz abzustimmen, da dies entsprechend kleine Fertigungstoleranzen erfordert.

Außerdem ist es problematisch, bei Brennkraftmaschinen, welche ihre Drehzahl je nach Betriebszustand ständig ändern, dennoch immer eine entsprechende Tilgung der Drehschwingungen sicher zu stellen.

Das Dokument US 5 036 726 A beschreibt einen Drehschwingungsdämpfer für ein Kraftfahrzeug, welcher nicht nur über einzelnen Eigenfrequenzen eine ausreichende Schwingungsdämpfer bieten können soll, sondern über einen breiten kontinuierlichen Frequenzbereich. Hierzu wird vorgeschlagen, innerhalb einer hohlen Nabe ein segmentiertes Schwungrad, insbesondere mit in ihrer Masse zueinander abweichenden Segmenten, anzuordnen, dessen einzelnen Segmente jeweils über ein elastisches Ringsegment innen an der Nabe angeschlossen sind. Mit zunehmender Drehzahl drücken die einzelnen Massesegmente nun zunehmend auf das Segment des ihnen zugeordneten elastischen Ringes, um dieses zu komprimieren. Über diese Komprimierung soll die Steifigkeit des elastischen Ringes beziehungsweise der Ringsegmente erhöht werden und hierüber die Schwingungsfrequenz der Dämpfung verändert werden. In der Praxis hat sich nun aber herausgestellt, dass diese Änderung der Frequenz der Dämpfung nicht wie gewünscht arbeitet, da allein das Zusammenpressen der elastischen Elemente in Radialrichtung keinen signifikanten Einfluss auf die Übertragung der Schehrkräfte im elastischen Element hat, mittels welchem die einzelnen Ringsegmente als Masseelemente von der Nabe über den elastischen Ring sozusagen mitgerissen werden. Der Drehschwingungsdämpfer hat sich daher als nicht ausreichend effektiv erwiesen.

Das Dokument JP 09060690 A beschreibt einen Drehschwingungsdämpfer, bei welchem ein Masseelement in Umfangsrichtung über ein zwischengeschaltetes elastisches Element von einer Nabe mitgerissen wird. Dadurch, dass sich der radial äußere Bereich des elastischen Elementes, welcher die Antriebskräfte in Umfangsrichtung von der Nabe auf das Masseelement überträgt, durch vorgesehene radial weiter innenliegende Einschnürungen des elastischen Elementes mit zunehmender Drehzahl aufgrund der wirkenden Fliehkraft nach außen bewegen kann, soll die Eigenfrequenz des Dämpfers verändert werden. Problematisch ist jedoch, dass, damit der radial äußere Bereich des elastischen Elementes ausreichend weit nach außen wandert, die Einschnürungen mit einem vergleichsweise kleinen Querschnitt ausgeführt sein müssen und dann zu einem Abriss neigen. Wenn hingegen der Querschnitt der Einschnürungen größer gewährt wird, um diese stabiler auszuführen, erfolgt nicht mehr die gewünschte Verformung des Massenelementes. Der Drehschwingungsdämpfer arbeitet daher nicht zufriedenstellend.

Neben der oben genannten US 5,036,726 beschreiben auch die US 2006/0081086 A1 sowie die GB 2 195 003 A entsprechende Aufbauten mit einer radialen Kraftübertragung zwischen Primärteil und Sekundärteil über elastische Elemente.

Aus der US 2004/0069092 A1 ist ferner ein Aufbau bekannt, welcher über Aktuatoren das Verhalten eines Schwingungsdämpfers entsprechend beeinflusst.

Ferner zeigt die EP 1 672 250 A1 einen Aufbau zur Leistungsübertragung mit einer elastischen Kupplung zur Dämpfung von Drehschwingungen, wobei ein Primärteil und ein Sekundärteil hier über elastische Elemente miteinander in Umfangsrichtung verbunden sind.

Es ist daher die Aufgabe der vorliegenden Erfindung, die eingangs genannten Vorrichtungen entsprechend weiterzuentwickeln und einen einfachen und effizienten Aufbau zu gewährleisten, welcher über verschiedene Drehzahlen hinweg Drehschwingungen in den erforderlichen Frequenzen zu vermindern beziehungsweise zu eliminieren vermag.

Erfindungsgemäß wird diese Aufgabe durch eine Vorrichtung mit den Merkmalen des unabhängigen Patentanspruchs gelost.

Gemäß einer Ausführung der Erfindung werden in der Vorrichtung ebenfalls Masseelemente eingesetzt. Im Gegensatz zum Stand der Technik dient die insbesondere radiale Verschiebung dieser Massenelemente durch die Fliehkraft jedoch nicht primär dazu, das Trägheitsmoment entsprechend zu verändern und damit die Dämpfung zu beeinflussen. Typischerweise kommen bei dem erfindungsgemäßen Aufbau sehr viel geringere Massen zum Einsatz. Ihre Aufgabe besteht darin, als eine Art Steuerelement auf die elastischen Mittel, welche Primärteil und Sekundärteil verbinden, so einzuwirken, dass sich deren Federkennlinie und/oder die Kopplung zwischen Primärteil und Sekundärteil über die elastischen Mittel verändert.

Dazu können die elastischen Mittel beispielsweise so ausgebildet sein, dass sie von den mit steigender Drehzahl durch die Fliehkraft nach außen bewegten Masseelementen entsprechend gestaucht werden. Die elastischen Mittel erfahren somit über die Masseelemente eine drehzahlabhängige Vorspannung, welche wiederum drehzahlabhängig die Federkennlinie des elastischen Mittels entsprechend beeinflusst. Außerdem kann auch die Kopplung zwischen dem Primärteil und dem Sekundärteil über die elastischen Mittel entsprechend beeinflusst werden. Dies kann beispielsweise dadurch erfolgen, dass mit der Stauchung der elastischen Mittel durch die Masseelemente eine unterschiedlich große Anlagefläche der elastischen Mittel an dem Primärteil und/oder dem Sekundärteil zustande kommt. Im Allgemeinen wird dadurch eine unterschiedliche Einleitung der Kräfte zwischen dem Primärteil und dem Sekundärteil erfolgen, so dass auch hierüber eine drehzahlabhängige Veränderung der Kopplung und damit eine drehzahlabhängige Veränderung der Dämpfung erzielt werden kann. Durch die bauliche Ausgestaltung kann nun die Federkennlinie und/oder die Kopplung mit der Drehzahl der rotierenden Welle gezielt verändert werden, so dass Drehschwingungen drehzahlabhängig gedämpft beziehungsweise getilgt werden.

Im Allgemeinen werden die beiden Effekte gemeinsam auftreten und sich entsprechend überlagern, es ist jedoch auch denkbar, dass durch geeignete mechanische Maßnahmen einer der Effekte entsprechend eliminiert wird.

Die Masseelemente sind vorteilhaft als gegenüber den elastischen Mitteln separate, insbesondere aus einem anderen Werkstoff bestehende Elemente ausgeführt, welche jedoch unmittelbar an den elastischen Mitteln angeschlossen sein können, insbesondere formschlüssig und/oder stoffschlüssig, beispielsweise durch anvulkanisieren.

Die Masseelemente nehmen vorteilhaft nicht an einer Drehmomentübertragung in der Vorrichtung zur Verminderung von Drehschwingungen teil, das heißt sie sind außerhalb des Antriebsleistungsflusses angeordnet. So sind die Masseelemente vorteilhaft zusätzlich und insbesondere separat zu dem Primärteil und dem Sekundärteil der erfindungsgemäßen Vorrichtung vorgesehen, das heißt diese sind nicht über das oder die elastischen Mittel in Umfangsrichtung mit dem Primärteil und/oder dem Sekundärteil gekoppelt.

Auch ist es möglich, die Federkennlinie der elastischen Mittel und/oder die Kopplung zwischen dem Primärteil und dem Sekundärteil drehzahlabhängig dadurch zu verändern, dass die Masseelemente durch ihre Bewegung die elastischen Mittel in die Länge ziehen, verwinden oder eine Scherkraft auf diese aufbringen.

Als elastische Mittel können dabei Elastomere ebenso eingesetzt werden, wie mechanische Federelemente oder Gasdruckfederelemente, sowie Kombinationen hiervon. Um die Kopplung in Umfangsrichtung ebenso sicherzustellen, wie die Möglichkeit Druck in radialer Richtung zur Veränderung der Federkennlinie auszuüben, könnte eine Gasfeder beispielweise T-förmig ausgebildet werden.

Gemäß einer alternativen oder zusätzlichen Ausgestaltung der Erfindung ist dem elastischen Mittel beziehungsweise sind den elastischen Mitteln wenigstens ein Aktuator zugeordnet, welcher derart auf das oder die elastischen Mittel einwirkt, dass deren Federkennlinie verändert und/oder die Kopplung zwischen dem Primärteil und dem Sekundärteil über das oder die elastischen Mittel verändert wird. Dabei kann ein einziger Aktuator vorgesehen sein. In der Regel wird jedoch eine Vielzahl von Aktuatoren vorgesehen sein, beispielsweise pro elastischem Mittel jeweils ein Aktuator. Ferner ist eine Steuereinrichtung vorgesehen, welche den Aktuator oder die Aktuatoren verschiebt und/oder verdreht, um die beschriebene Einwirkung auf die elastischen Mittel auszuüben. Auch eine andere Betätigung des oder der Aktuatoren kommt in Betracht, beispielsweise eine Formänderung. Die Verdrehung und/oder Verschiebung und/oder andersartige Betätigung erfolgt dabei während des Betriebs der Vorrichtung zur Verminderung von Drehschwingungen in Abhängigkeit der Drehzahl und/oder einer anderen vorgegebenen Größe, wobei diese Größe in der Regel den Betriebszustand der Vorrichtung beschreibt. Im Unterschied zur erstgenannten Ausführungsform der vorliegenden Erfindung wird demnach nicht allein über die Fliehkraft, die auf Masseelemente wirkt, die Federkennlinie der elastischen Mittel beziehungsweise des einen elastischen Mittels verändert und/oder die Kopplung zwischen dem Primärteil und dem Sekundärteil über das oder die elastischen Mittel verändert, sondern es findet eine gesteuerte oder geregelte Veränderung statt.

Der Aktuator beziehungsweise die Aktuatoren können beispielsweise als hydraulisch oder pneumatisch oder elektrisch beziehungsweise elektromagnetisch betätigte Aktuatoren ausgeführt sein. Jedoch kommen auch andere Ausführungsarten in Betracht.

Die erfindungsgemäße Vorrichtung kann dabei wie eingangs bereits angedeutet zur Minderung von Drehschwingungen eingesetzt werden, ohne dass ein Drehmoment über sie übertragen wird. Diese Verwendung der erfindungsgemäßen Vorrichtung als Tilger, insbesondere als Frequenztilger oder Ordnungstilger, erfolgt dadurch, dass genau eines der Teile, insbesondere das Primärteil, mit der rotierenden Welle verbunden ist. Das andere Teil, insbesondere das Sekundärteil, wirkt dann als reines Masseelement zur Dämpfung der Drehschwingungen, welches über die elastischen Mittel entsprechend mit dem ersten Teil gekoppelt ist. Durch den eingangs genannten Effekt kann nun diese Kopplung mit der Drehzahl der rotierenden Welle gezielt verändert werden, um so die Drehschwingungen drehzahlabhängig zu tilgen.

In einer alternativen Anwendung kann die Vorrichtung auch zur Verminderung von Drehschwingungen derart eingesetzt werden, dass diese ein Drehmoment überträgt. Sie wird dann als elastische Kupplung verwendet, wobei die Welle eine Antriebsseite und eine Abtriebsseite aufweist. Die Antriebsseite ist mit einem der Teile verbunden, die Abtriebsseite mit dem anderen Teil. Auch hier kann über die Beeinflussung der Federkennlinie und/oder der Kupplung zwischen Primärteil und Sekundärteil eine entsprechende drehzahlabhängige Beeinflussung der Kupplung zwischen Primärteil und Sekundärteil erreicht werden, so dass über die jeweiligen Frequenzen hinweg Drehschwingungen wirksam gedämpft werden.

Obwohl vorliegend die Erfindung anhand von Ausführungsbeispielen mit einer Vielzahl von elastischen Mitteln, wobei auf jedes elastische Mittel wenigstens ein Masseelement einwirkt, dargestellt ist, ist es prinzipiell möglich, nur ein einziges elastisches Mittel zwischen Primärteil und Sekundärteil vorzusehen, auf welches ein Masseelement oder mehrere Masseelemente einwirken.

Weitere vorteilhafte Ausgestaltungen der Erfindung ergeben sich aus den restlichen Ansprüchen sowie aus dem Ausführungsbeispiel, welches nachfolgend anhand der Figuren näher erläutert wird.

Dabei zeigt:
- Figur 1: einen senkrecht zur Achse der rotierenden Welle verlaufenden Schnitt durch einen Abschnitt der erfindungsgemäßen Vorrichtung;
- Figur 2: die Darstellung gemäß Figur 1 bei höherer Drehzahl;
- Figur 3: die Ansicht gemäß Figur 1 in einer alternativen Ausführungsform;
- Figur 4: alternative Ausführungsformen des elastischen Mittels;
- Figur 5: eine alternative Ausführungsform der Erfindung mit Masseelementen, die auf elastische Mittel in Form einer Feder oder mehrerer Federn wirken;
- Figur 6: eine alternative Ausführungsform der Erfindung mit gesteuerten Aktuatoren, um die Federkennlinie der elastischen Mittel beziehungsweise die Kopplung zwischen dem Primärteil und dem Sekundärteil während des Betriebs zu verändern.

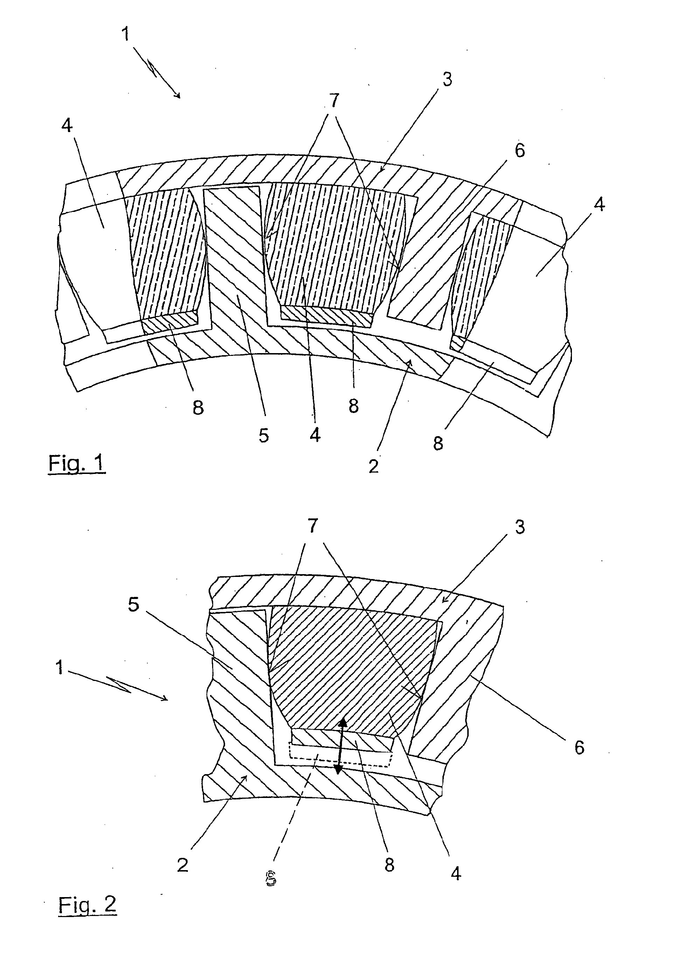

In der Figur 1 ist ein Abschnitt der Vorrichtung 1 gemäß der Erfindung zu erkennen. Bei dem Abschnitt handelt es sich dabei um einen Ausschnitt aus einer Schnittdarstellung in einer Schnittebene senkrecht zur Achse der rotierenden Welle, welche hier selbst nicht dargestellt ist. Die Vorrichtung 1 umfasst ein Primärteil 2 sowie ein Sekundärteil 3. Die Vorrichtung 1 rotiert dabei als Ganzes mit der rotierenden Welle. Dies kann beispielsweise dadurch erreicht werden, dass bei der Verwendung als Tilger das Primärteil 2 drehfest mit der rotierenden Welle verbunden ist, oder dass die rotierende Welle selbst das Primärteil 2 bildet. Das Sekundärteil 3 ist dann lediglich mittelbar mit dem Primärteil 1 verbunden, ohne dass weitere Bauteile an diesem angeschlossen sind.

Bei der Ausführung als elastische Kupplung kann beispielsweise die Antriebsseite der rotierenden Welle drehfest mit dem Primärteil 2 ausgebildet sein, oder das Primärteil 2 bildet einstückig das entsprechende Endteil der Antriebsseite der Welle. Das Sekundärteil 3 wäre in diesem Beispiel dann drehfest mit der Abtriebsseite der Welle verbunden beziehungsweise würde deren abtriebsseitiges Ende bilden.

Unabhängig von der Verwendung als elastische Kupplung oder Tilger ist die Verbindung zwischen dem Primärteil 2 und dem Sekundärteil 3 über elastische Mittel 4 entscheidend. Die elastischen Mittel sind dabei in dem hier dargestellten Ausführungsbeispiel als elastische Elemente 4 aus einem geeigneten Elastomer dargestellt. Sie bieten die benötigte Elastizität einerseits und können andererseits durch Reibungsvorgänge im Materialinneren die benötigte Dämpfung sicherstellen. Zur Kopplung des Sekundärteils 2 mit dem Primärteil 1 über die elastischen Elemente 4 weist sowohl das Primärteil 2 als auch das Sekundärteil 3 geeignete Rippen 5, 6 auf. Die Rippen 5 des Primärteils 2 ragen dabei in radialer Richtung nach außen, während die Rippen 6 des Sekundärteils 3 in radialer Richtung nach innen ragen. Wenn Primärteil und Sekundärteil nun in axialer Richtung ineinander geschoben werden, so bilden sich zwischen den jeweils benachbarten Rippen 5 des Primärteils 2 und Rippen 6 des Sekundärteils 3 entsprechende Hohlräume. In diesen Hohlräumen sind jeweils die elastischen Elemente 4 angeordnet.

Die zwischen den Rippen 5, 6 angeordneten elastischen Elemente 4 koppeln dabei das Primärteil 2 und das Sekundärteil 3 miteinander, da diese Rotationsbewegungen von der einen Rippe 5 auf die andere Rippe 6 übertragen. Die Übertragung dieser Rotationsbewegungen und im Falle von Schwingungen auch der Rotationsschwingungen erfolgt dabei ausschließlich über die elastischen Elemente 4. Je nach Auslegung der elastischen Elemente 4, also deren Elastizität, Form und Federsteifigkeit, wird die Kopplung entsprechend beeinflusst. Die hier beispielhaft dargestellten elastischen Elemente 4 weisen in Richtung der Rippen 5, 6 jeweils eine bogenförmige Kontur 7 auf, beispielsweise mit einer Wölbung nach außen. Alternative Ausführungsformen von derartigen Konturen sind ebenfalls denkbar und werden später noch beschrieben.

Im hier dargestellten Ausführungsbeispiel der Figur 1 ist eine Stellung der Vorrichtung 1 bei geringer Drehzahl oder im Stillstand dargestellt. Die Kontur 7 liegt dabei an den jeweiligen Rippen 5, 6 jeweils nur minimal an oder weist ein geringes Spiel zu dieser Kontur 7 auf.

Außerdem sind auf der radial innenliegenden Seite der elastischen Elemente 4 Masseelemente 8 zu erkennen. Diese Masseelemente 8 können dabei fest mit den elastischen Elementen 4 verbunden sein, dies kann beispielsweise durch ein geeignetes Verkleben erfolgen. Sie könnten jedoch auch nur lose auf die Masseelementen 8 aufliegen und anderweitig so fixiert sein, dass eine Bewegung mit zumindest einem radialen Bewegungsanteil möglich ist. Bei dem Ausführungsbeispiel ist es nur wesentlich, dass diese Masseelemente 8 mit steigender Drehzahl des Primärteils 2 und damit der Vorrichtung 1 durch die Fliehkraft in radialer Richtung nach außen auf die elastischen Elemente 4 einwirken, indem Sie zum Beispiel auf diese gedrückt werden.

In der Figur 2 ist anhand eines etwas kleiner gewählten Ausschnitts am Beispiel eines elastischen Elements 4 zu erkennen, wie sich die Vorrichtung 1 bei höheren Drehzahlen verhält. Durch das Masseelement 8, welches durch die Fliehkraft in radialer Richtung nach außen gedrückt wird, ist das elastische Element 4 entsprechend verformt worden, wobei die ursprüngliche Lage und Kontur des Masseelements 8 nochmals gestrichelt eingezeichnet ist, um den Unterschied besser erkennbar zu machen. Das elastische Element 4 wird mit zunehmender Drehzahl durch das Masseelement 8 und die damit zunehmend auf dieses Masseelement wirkenden Fliehkräfte also entsprechend gestaucht. Dies hat zwei Veränderungen bei dem elastischen Element 4 zur Folge. Durch das Stauchen wird das elastische Element 4 entsprechend verhärtet, so dass sich dessen Federkennlinie verändert. Durch die sich verändernde Federkennlinie wird auch die Kopplung zwischen dem Primärteil 2 und dem Sekundärteil 3 über die elastischen Elemente 4 entsprechend verändert.

Außerdem kommt es, wie in Figur 2 zu erkennen ist, durch die Stauchung des elastischen Elements 4 zu einer Vergrößerung der Anlagefläche zwischen dem elastischen Element 4 und den Rippen 5 beziehungsweise 6 des Primärelements 2 beziehungsweise des Sekundärelements 3. Die Kopplung zwischen diesen beiden Teilen 2, 3 wird also durch die Veränderung der Federkennlinie einerseits und durch die Veränderung der Anlagefläche der Kontur 7 an den Rippen 5, 6 andererseits beeinflusst. Ferner kommt es durch das radiale Verschieben der Masseelemente 8 zu einer geringen Veränderung des Trägheitsmoments der Vorrichtung 1, da die Massen gegenüber der Rotationsachse nach außen gewandert sind.

All diese Effekte führen dazu, dass sich die Dämpfung der Vorrichtung 1 entsprechend verändert, wobei der Effekt primär von der Verhärtung und damit der Veränderung der Federkennlinie des elastischen Mittels 4 herrührt. Durch diese Veränderung kann nun erreicht werden, dass die Vorrichtung 1 mit sich ändernder Drehzahl und sich damit ändernden Fliehkräften auf die Masseelemente 8 einen sich ändernden Dämpfungscharakter aufweist, insbesondere eine mit zunehmender Drehzahl härtere Dämpfung.

Durch eine geeignete Auswahl des Materials des elastischen Elements 4 und eine geeignete Formgebung desselben kann die Dämpfung für jede einzelne Drehzahl nun annähernd beliebig beeinflusst werden.

Es ist jedoch auch möglich, die Dämpfung durch Verändern der Einwirkung der Masseelemente 8 auf die elastischen Mittel 4 zu variieren, ohne dass sich die Anlageflächen zwischen dem Primärteil 2, dem elastischen Mittel 4 und dem Sekundärteil 3 ändern, durch entsprechende Gestaltung der Kontur 7.

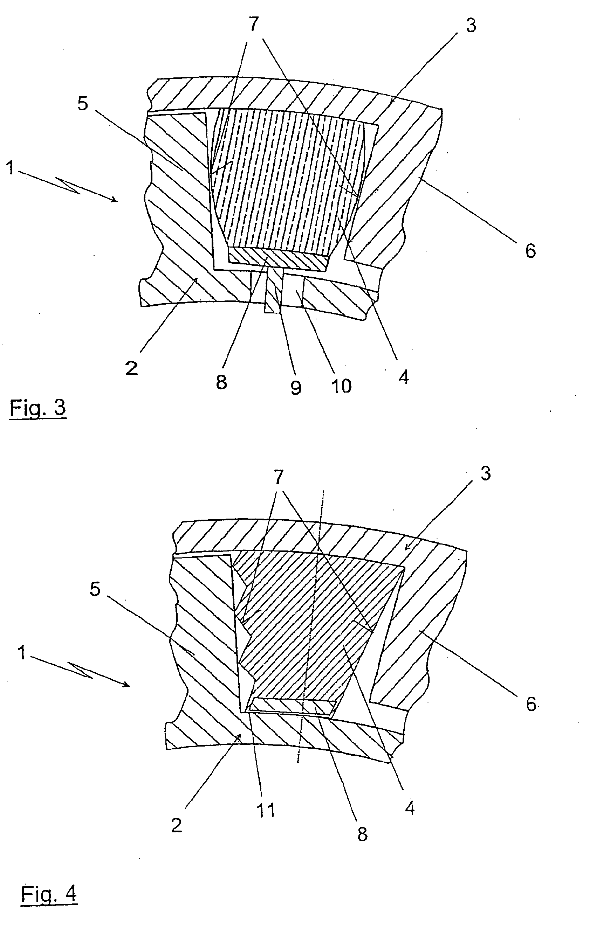

Das Masseelement 8 muss dabei -wie oben schon erwähnt - nicht zwingend fest mit dem elastischen Element 4 verbunden sein. Es wäre auch denkbar, dass dieses Masseelement seitlich an einer der Rippen 5, 6 über ein Gelenk angelenkt wird, so dass es sich unter der Fliehkraft nach außen bewegen kann und eine Kraftkomponente in Richtung der Fliehkraft auf das elastische Element 4 verursacht. Alternativ hierzu ist in Figur 3 eine Ausführungsform zur Befestigung des Masseelements 8 zu erkennen, bei dem diese in der Art eines Stempels ausgeführt ist. Ein mit dem Masseelement 8 fest verbundener Stempelschaft 9 läuft dabei in einem Langloch 10 in dem Primärelement 2. Durch den entsprechenden Aufbau bleibt das stempelförmige ausgeführte Masseelement mit seinem Schaft 9 so fixiert, dass es in Rotationsrichtung geringfügige Bewegungen ausführen kann und in radialer Richtung in den benötigten Grenzen frei beweglich ist und von der Fliehkraft entsprechend nach außen gedrückt werden kann, um das elastische Element 4, wie beispielsweise in Figur 2 dargestellt, zu stauchen.

In Figur 4 sind nun an einer Darstellung des elastischen Elements beispielhaft zwei weitere Konturen 7 für das elastische Element erkennbar. In der linken Hälfte der Figur 4 ist dabei eine sägezahnförmige Kontur 7 des elastischen Elements 4 dargestellt, welche man sich symmetrisch zur eingezeichneten Symmetrieachse des Hohlraums ergänzt vorstellen muss. In der rechten Hälfte ist eine gerade Kontur 7 des elastischen Elements 4 dargestellt, welche symmetrisch ergänzt zu einer trapezförmigen Ausgestaltung des Elements führen würde. Daneben sind auch dreieckige, runde, tonnenförmige, quaderförmige oder zylindrische Formen des elastischen Elements 4 denkbar. Durch die Ausgestaltung des elastischen Elements in seiner Größe und seiner Kontur 7 lässt sich dementsprechend die Verformung und die Verhärtung des elastischen Elements durch die über die Fliehkraft nach außen gedrückte Masseelemente 8 entsprechend beeinflussen, ebenso wie die Anlagefläche des elastischen Elements beziehungsweise seiner Kontur 7 an den Rippen 5, 6.

Außerdem ist in Figur 4 zu erkennen, dass das Masseelement 8 von einer Schicht 11 aus elastischem Material umgeben ist. Dieser Überzug mit einer elastischen Schicht 11 hat im Vergleich zu einem einseitigen Anvulkanisieren des Masseelements 8 an das elastische Element 4, wie beispielsweise in der Figur 1 dargestellt ist, den Vorteil, dass bei sich verringernder Drehzahl oder dem Eintreten des Stillstands der Vorrichtung 1 ein Anschlagen der Masseelemente 8 an das Primärteil 2 - sofern dies konstruktiv vorkommt - gedämpft wird und sich dadurch die Geräuschemission entsprechend verringern.

Die Details der beschriebenen Ausführungsformen können dabei natürlich beliebig untereinander kombiniert werden. So könnte zum Beispiel auch der Stempelförmige Aufbau mit einer entsprechenden Schicht 11 des Elastomers überzogen sein, es könnten beliebige Formen der Kontur 7 der elastischen Mittel 4 miteinander kombiniert werden, oder dergleichen. Auch ist es möglich, dass das Masseelement 8 alternativ oder zusätzlich zu der Druckkraft eine andere Kraft auf das elastische Mittel 4 aufbringt, beispielsweise eine Zugkraft, eine insbesondere lineare Schwerkraft oder eine Verwindungskraft.

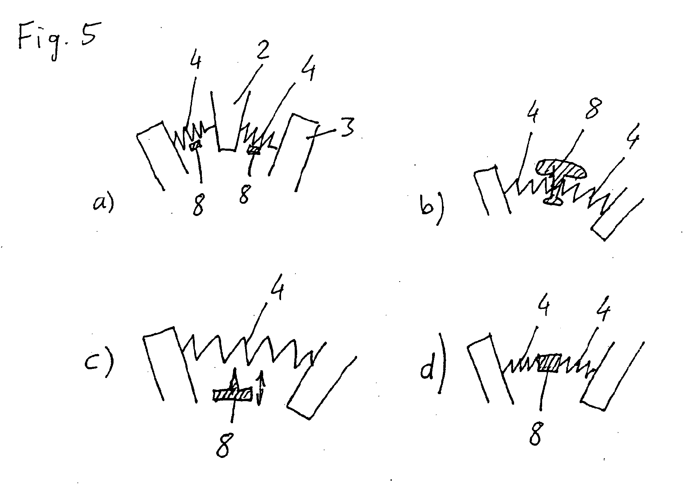

In der Figur 5 sind verschiedene Ausführungsbeispiele a bis d für eine erfindungsgemäße Vorrichtung dargestellt, bei welchen die elastischen Mittel 4 als Feder, entweder Zugfeder oder Druckfeder ausgebildet sind. Allgemein könnte man die elastischen Mittel 4 auch als mechanischen Kraftspeicher bezeichnen.

Bei den gezeigten Ausführungsbeispielen sind ferner Primärteil 2 und Sekundärteil 3 gegenüber den zuvor dargestellten Ausführungsbeispielen vertauscht, wobei natürlich auch hier die Anordnung umgekehrt sein könnte.

Den elastischen Mitteln 4 in Form von Federn sind wiederum Masseelemente 8 zugeordnet. Diese Masseelemente 8 bewirken mit zunehmender Drehzahl der Vorrichtung beziehungsweise von Primärteil 2 und Sekundärteil 3 eine Veränderung der Federkennlinie. Diese Veränderung kann mittels der Masseelemente 8, wie dargestellt, auf verschiedene Art bewirkt werden. So drückt gemäß der Ausführung a jedes Federelement 8 radial von innen nach außen mit zunehmender Drehzahl auf die Federn und bewirkt dadurch insbesonders eine Verlängerung der Federn. Gemäß der Ausführung 5b zieht jedes Masseelement 8 an einer Feder mit zunehmender Drehzahl der Vorrichtung und bewirkt somit ebenfalls eine Verlängerung der Feder. Wie dargestellt, kann das Masseelement 8 beispielsweise zwischen zwei Federwindungen eingreifen und dort gegen Herausrutschen befestigt sein.

Gemäß der Ausführungsform in der Figur 5c ist das der Feder zugeordnete Masseelement 8 ebenfalls in Radialrichtung beweglich, und taucht in Abhängigkeit der Drehzahl der Vorrichtung zur Verminderung von Drehschwingungen einer rotierenden Welle beziehungsweise in Abhängigkeit der Drehzahl der Welle mehr oder minder in die Feder ein. Insbesondere ist das Masseelement 8 unterhalb einer vorgegebenen Drehzahl vollständig außerhalb der Feder angeordnet und taucht entsprechend bei größeren Drehzahlen in die Feder ein, um deren Federkennlinie zu verändern. Selbstverständlich ist es auch möglich, das Masseelement 8 derart anzuordnen, dass es bis zu einer vorgegebenen Drehzahl eingetaucht in die Feder positioniert ist und sich oberhalb dieser Drehzahl aus der Feder herausbewegt. Durch das Eintauchen des Masseelementes 8 in die Feder kann ein Festsetzen der Feder an dieser Stelle und/oder eine Verformung der Feder erreicht werden.

Gemäß der Ausführungsform in der Figur 5d ist das Masseelement zwischen zwei Federn beziehungsweise zwischen zwei Federabschnitten, in Umfangsrichtung der erfindungsgemäßen Vorrichtung gesehen, positioniert, sozusagen in die Feder integriert und bewirkt mit zunehmender Drehzahl eine Verlängerung der Feder. Hier kann beispielsweise das Masseelement einteilig mit der Feder ausgeführt sein.

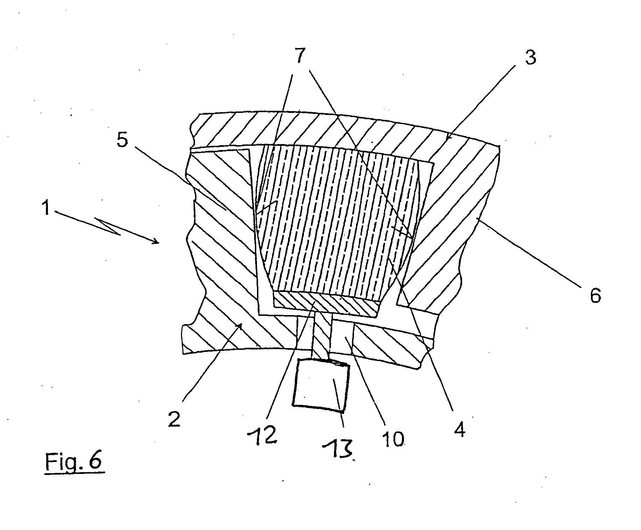

In der Figur 6 ist eine Ausführungsform dargestellt, bei welcher ein Aktuator 12, der mittels einer Steuereinrichtung 13 verdreht und/oder verschoben wird, die Federkennlinie des elastischen Mittels 4 ändert. Hierdurch ist eine aktive Steuerung der Federkennlinie beziehungsweise der Kopplung zwischen dem Primärteil 2 und dem Sekundärteil 3 in Abhängigkeit einer vorgegebenen Eingangsgröße, beispielsweise der Drehzahl von Primärteil 2 beziehungsweise Sekundärteil 3 möglich. Selbstverständlich könnte ein solcher Aktuator 12 mit der Steuereinrichtung 13 auch bei einer Ausführung mit einem mechanischen Kraftspeicher beziehungsweise einer Feder, wie sie beispielsweise in der Figur 5 dargestellt ist, vorgesehen sein.

Auch bei der Ausführungsform gemäß der Figur 6 kann beispielsweise der Aktuator 12 in Radialrichtung bezogen auf die Vorrichtung zur Verminderung von Drehschwingungen mittels der Steuereinrichtung 13 bewegt werden und hat demgemäß eine vergleichbare Wirkung auf das elastische Mittel 4 wie die Masseelemente 8 gemäß der Figuren 1 bis 4.

Selbstverständlich ist es möglich, dass der Aktuator 12 nicht oder nicht nur derart mittels der Steuereinrichtung 13 bewegt wird, dass er mehr oder minder auf das elastische Mittel 4 drückt. Vielmehr ist es auch möglich, dass ein entsprechender Aktuator 12 eine mehr oder minder große Zugkraft auf das elastische Mittel 4 ausübt, um dessen Federkennlinie zu verändern, wenn dies gewünscht ist.

## Patentansprüche

1. Vorrichtung zur Verminderung von Drehschwingungen einer rotierenden Welle mit
einem Primärteil (2);
einem Sekundärteil (3);
beweglichen Masseelementen (8);
einem oder mehreren elastischen Mitteln (4); wobei
die elastischen Mittel (4) das Primärteil (2) und das Sekundärteil (3) in Umfangsrichtung miteinander koppeln; und wobei
wenigstens eines der Teile (2, 3) so mit der Welle verbunden ist, dass es mit der Welle rotiert;
**dadurch gekennzeichnet, dass**
die Masseelemente (8) so angeordnet sind, dass diese mit zunehmender Drehzahl in radialer Richtung zunehmend auf die elastischen Mittel (4) einwirken; und so
deren Federkennlinie verändern und/oder die Kopplung zwischen dem Primärteil (2) und dem Sekundärteil (3) über die elastischen Mittel (4) verändern; wobei
die beiden Teile (2, 3) eine Anzahl von radialen Rippen (5, 6) aufweisen; und wobei
zwischen in Umfangsrichtung benachbarten Rippen (5) des Primärteils und Rippen (6) des Sekundärteils (3) jeweils wenigstens eines der elastischen Mittel (4) angeordnet ist, über welches das Sekundärteil (3) insbesondere ausschließlich in Umfangsrichtung an dem Primärteil (2) abgestützt ist.

2. Vorrichtung zur Verminderung von Drehschwingungen einer rotierenden Welle mit
einem Primärteil (2);
einem Sekundärteil (3);
einem oder mehreren elastischen Mitteln (4); wobei
die elastischen Mittel (4) das Primärteil (2) und das Sekundärteil (3) miteinander koppeln; und wobei
wenigstens eines der Teile (2, 3) so mit der Welle verbunden ist, dass es mit der Welle rotiert;
**dadurch gekennzeichnet, dass**
dem oder den elastischen Mitteln (4) ein Aktuator (12), der über eine Steuereinrichtung (13) verschiebbar, verdrehbar und/oder anders betätigbar ist, derart zugeordnet ist und auf die elastischen Mittel (4) einwirkt, dass diese mit Verdrehung und/oder Verschiebung und/oder andere Betätigung des Aktuators (12) deren Federkennlinie verändern und/oder die Kopplung zwischen dem Primärteil (2) und dem Sekundärteil (3) über die elastischen Mittel (4) verändern; wobei
die Steuereinrichtung (13) derart eingerichtet ist, dass sie den Aktuator (12) in Abhängigkeit der Drehzahl der Welle und/oder einer anderen vorgegebenen Größe verschiebt, verdreht und/oder anders betätigt; wobei die beiden Teile (2, 3) eine Anzahl von radialen Rippen (5, 6) aufweisen; und wobei
zwischen in Umfangsrichtung benachbarten Rippen (5) des Primärteils und Rippen (6) des Sekundärteils (3) jeweils wenigstens eines der elastischen Mittel (4) angeordnet ist, über welches das Sekundärteil (3) insbesondere ausschließlich in Umfangsrichtung an dem Primärteil (2) abgestützt ist.

3. Vorrichtung nach einem der Ansprüche 1 oder 2, **dadurch gekennzeichnet, dass** die elastischen Mittel als Elemente (4) aus einem elastischen Material, insbesondere einem Elastomer, ausgebildet sind.

4. Vorrichtung nach einem der Ansprüche 1 bis 3, **dadurch gekennzeichnet, dass** die Masseelemente (8) oder der wenigstens eine Aktuator (12) in radialer Richtung beweglich ausgebildet sind/ist.

5. Vorrichtung nach einem der Ansprüche 1, 3 oder 4, **dadurch gekennzeichnet, dass** die Masseelemente (8) als separat zu dem oder den elastischen Mitteln (4) vorgesehene Elemente ausgebildet sind, insbesondere aus einem anderen Werkstoff als das oder die elastischen Mittel (4).

6. Vorrichtung nach einem der Ansprüche 1 bis 5, **dadurch gekennzeichnet, dass** die Masseelemente (8) und/oder der wenigstens der eine Aktuator (12) im radial innenliegenden Bereich der elastischen Mittel (4) angeordnet sind/ist und insbesondere das oder die elastischen Mittel (4) mit zunehmender Drehzahl zunehmend zusammendrücken.

7. Vorrichtung nach einem der Ansprüche 1 bis 6, **dadurch gekennzeichnet, dass** die Masseelemente (8) und/oder der wenigstens eine Aktuator (12) fest mit den elastischen Mitteln (4) verbunden sind/ist.

8. Vorrichtung nach einem der Ansprüche 1 bis 7, **dadurch gekennzeichnet, dass** die Masseelemente (8) oder der wenigstens eine Aktuator (12) zumindest teilweise mit einem elastischen Material, insbesondere einem Elastomer, überzogen sind/ist.

9. Vorrichtung nach Anspruch 8, **dadurch gekennzeichnet, dass** die Masseelemente (8) oder der wenigstens eine Aktuator (12) an den elastischen Mitteln (4) anvulkanisiert sind/ist.

10. Verwendung einer Vorrichtung nach einem der Ansprüche 1 bis 9 als Tilger, wobei genau eines der Teile (2, 3), insbesondere das Primärteil (2), drehfest mit der rotierenden Welle verbunden ist.

11. Verwendung einer Vorrichtung nach einem der Ansprüche 1 bis 9 als elastische Kupplung, wobei die Welle in eine Antriebsseite und eine Abtriebsseite aufgeteilt ist, und eines der Teile (2, 3) drehfest mit der Antriebsseite verbunden ist, und das andere der Teile (3, 2) drehfest mit der Abtriebsseite verbunden ist.

## Claims

1. A device for reducing the torsional vibrations of a rotary shaft with a
primary part (2);
a secondary part (3);
mobile mass elements (8);
one or several elastic means (4); whereas
the elastic means (4) couple together the primary part (2) and the secondary part (3) in the circumferential direction; and whereas at least one of the parts (2, 3) is connected to the shaft in such a way that it rotates with the shaft;
**characterised in that**
the mass elements (8) are arranged so that they increasingly act upon the elastic means (4) with increasing rotational speed in radial direction;
and thus modify their spring characteristic line and/or the coupling between the primary part (2) and the secondary part (3) via the elastic means (4); whereas
both parts (2, 3) have a number of radial ribs (5, 6);
and whereas
respectively at least one of the elastic means (4) is arranged between ribs (5) of the primary part and ribs (6) of the secondary part (3) situated close to each other in circumferential direction, means via which the secondary part (3) is supported in particular exclusively in circumferential direction against the primary part (2).

2. A device for reducing the torsional vibrations of a rotary shaft with a
primary part (2);
a secondary part (3);
one or several elastic means (4); whereas
the elastic means (4) couple together the primary part (2) and the secondary part (3) in the circumferential direction; and whereas at least one of the parts (2, 3) is connected to the shaft in such a way that it rotates with the shaft;
**characterised in that**
an actuator (12), which can be moved, rotated and/or otherwise operated via a control device (13), is arranged in such a way with respect to the one or several elastic means (4) and acts upon the elastic means (4), that said elastic means modify their spring characteristic line by rotating and/or moving and/or otherwise operating said actuator (12) and/or modify the coupling between the primary part (2) and the secondary part (3) via the elastic means (4); whereas
the control device (13) is designed in such a way that it moves, rotates and/or otherwise operates the actuator (12) according to the rotational speed of the shaft and/or another preset magnitude; whereas both parts (2, 3) have a number of radial ribs (5, 6); and whereas respectively at least one of the elastic means (4) is arranged between ribs (5) of the primary part and ribs (6) of the secondary part (3) situated close to each other in circumferential direction, means via which the secondary part (3) is supported in particular exclusively in circumferential direction against the primary part (2).

3. The device according to one of the claims 1 or 2, **characterised in that** the elastic means are formed as elements (4) made of an elastic material, in particular an elastomer.

4. The device according to one of the claims 1 to 3, **characterised in that** the mass elements (8) or said at least one actuator (12) are mobile in radial direction.

5. The device according to any of the claims 1, 3 or 4, **characterised in that** the mass elements (8) are provided as separate elements with respect to the one or several elastic means (4), in particular of another material as the one or several elastic means (4).

6. The device according to one of the claims 1 to 5, **characterised in that** the mass elements (8) and/or said at least one actuator (12) are arranged in the radially internal area of the elastic means (4) and in particular increasingly compress the one or several elastic means (4) with increasing rotational speed.

7. The device according to one of the claims 1 to 6, **characterised in that** the mass elements (8) and/or said at least one actuator (12) are rigidly connected to the elastic means (4).

8. The device according to one of the claims 1 to 7, **characterised in that** the mass elements (8) or said at least one actuator (12) are covered at least partially with an elastic material, in particular an elastomer.

9. The device according to claim 8, **characterised in that** the mass elements (8) and/or said at least one actuator (12) are vulcanised to the elastic means (4).

10. An application of a device according to one of the claims 1 to 9 as an eliminator, whereas exactly one of the parts (2, 3), in particular the primary part (2), is torque-proof corrected to the rotating shaft.

11. An application of a device according to one of the claims 1 to 9 as an elastic coupling, whereas the shaft is divided into a drive side and a power take-off side, and one of the parts (2, 3) is torque-proof connected to the drive side, and the other of the parts (3, 2) is torque-proof connected to the power take-off side.

## Revendications

1. Dispositif de réduction des vibrations torsionnelles d'un arbre rotatif pourvu d'une partie primaire (2) ;
d'une partie secondaire (3);
d'éléments de masse mobiles (8) ;
d'un ou de plusieurs moyens élastiques (4) ; où
les moyens élastiques (4) accouplent l'une à l'autre la partie primaire (2) et la partie secondaire (3) dans le sens de la circonférence ; et où au moins l'une des parties (2, 3) est connectée à l'arbre de façon à tourner avec l'arbre;
**caractérisé en ce que**
les éléments de masse (8) sont disposés de telle sorte que lesdits éléments jouent avec l'augmentation de la vitesse de rotation sur les moyens élastiques (4) toujours davantage dans la direction radiale ;
et ainsi modifient leur courbe caractéristique de ressort et/ou modifient l'accouplement entre la partie primaire (2) et la partie secondaire (3) par le biais de moyens élastiques (4) ;
où les deux parties (2, 3) présentent un certain nombre de nervures radiales (5, 6) ;
et où
respectivement au moins l'un des moyens élastiques (4) est disposé entre des nervures (5) de la partie primaire et des nervures (6) de la partie secondaire, nervures voisines dans le sens de la circonférence, moyen élastique maintenant la partie secondaire (3) en particulier exclusivement dans le sens de la circonférence contre la partie primaire (2).

2. Dispositif de réduction des vibrations torsionnelles d'un arbre rotatif pourvu d'une partie primaire (2) ;
d'une partie secondaire (3) ;
d'un ou de plusieurs moyens élastiques (4) ;
les moyens élastiques (4) accouplent l'une à l'autre la partie primaire (2) et la partie secondaire (3) dans le sens de la circonférence ;
au moins l'une des parties (2, 3) est connectée à l'arbre de façon à tourner avec l'arbre ;
**caractérisé en ce**
**qu'**un actionneur (12) pouvant être déplacé, tourné et/ou commandé de toute autre façon, est agencé par rapport audit ou bien auxdits moyens élastiques (4) de telle sorte et joue sur les moyens élastiques (4), que lesdits moyens en faisant tourner et/ou en déplaçant et/ou en commandant l'actionneur (12) de toute autre façon, modifient leur courbe caractéristique de ressort et/ou modifient l'accouplement entre la partie primaire (2) et la partie secondaire (3) par le biais de moyens élastiques (4) ;
tandis que le dispositif de commande (13) est conçu de telle sorte qu'il déplace, fait tourner et/ou commande de toute autre façon l'actionneur (12) en fonction de la vitesse de rotation de l'arbre et/ou d'une autre grandeur prescrite ;
où les deux parties (2, 3) présentent un certain nombre de nervures radiales (5, 6) ; et où
respectivement au moins l'un des moyens élastiques (4) est disposé entre des nervures (5) de la partie primaire et des nervures (6) de la partie secondaire, nervures voisines dans le sens de la circonférence, moyen élastique maintenant la partie secondaire (3) en particulier exclusivement dans le sens de la circonférence contre la partie primaire (2).

3. Dispositif selon l'une des revendications 1 ou 2, **caractérisé en ce que** les moyens élastiques sont sous forme d'éléments (4) constitués d'un matériau élastique, en particulier un élastomère.

4. Dispositif selon l'une des revendications 1 à 3, **caractérisé en ce que** les éléments de masse (8) ou ledit au moins un actionneur (12) sont mobiles dans la direction radiale.

5. Dispositif selon l'une des revendications 1, 3 ou 4, **caractérisé en ce que** les éléments de masse (8) sont constitués comme éléments prévus séparément par rapport audit ou bien auxdits moyens élastiques (4), en particulier dans un autre matériau que ledit ou lesdits moyens élastiques (4).

6. Dispositif selon l'une des revendications 1 à 5, **caractérisé en ce que** les éléments de masse (8) et/ou ledit au moins actionneur (12) sont agencés dans la zone des moyens élastiques (4) située radialement à l'intérieur et compriment de manière accrue en particulier ledit ou lesdits moyens élastiques (4) avec l'augmentation de la vitesse de rotation.

7. Dispositif selon l'une des revendications 1 à 6, **caractérisé en ce que** les éléments de masse (8) et/ou ledit au moins actionneur (12) sont solidaires des moyens élastiques (4).

8. Dispositif selon l'une des revendications 1 à 7, **caractérisé en ce que** les éléments de masse (8) ou ledit au moins un actionneur (12) sont recouverts au moins partiellement d'un matériau élastique, en particulier un élastomère.

9. Dispositif selon la revendication 8, **caractérisé en ce que** les éléments de masse (8) et/ou ledit au moins actionneur (12) sont vulcanisés sur les moyens élastiques (4).

10. Utilisation d'un dispositif selon l'une quelconque des revendications 1 à 9 comme éliminateur, où précisément l'une des parties (2, 3), en particulier la partie primaire (2), est solidaire de l'arbre rotatif.

11. Utilisation d'un dispositif selon l'une quelconque des revendications 1 à 9 sous forme d'accouplement élastique, où l'arbre est réparti entre un côté entraînement et un côté prise de force, et l'une des parties (2, 3) est solidaire du côté entraînement, et l'autre des parties (3, 2) est solidaire du côté prise de force.
